# FASCICULE DE BREVET EUROPEEN

(11) **EP 0 519 142 B1**
(45) Date de publication et mention de la délivrance du brevet: **03.01.1996**
(21) Numéro de dépôt: 91420205.6
(22) Date de dépôt: 20.06.1991
(51) Int. Cl.: B29C 45/14

(54) **Dispositif pour amener et déposer dans un moule une étiquette souple sur un objet moulé**
Vorrichtung zum Zuführen und Ablegen eines biegsamen Etiketts in eine Form auf einen geformten Gegenstand
Apparatus for feeding and depositing a flexible label into a mould onto a moulded object

(43) Date de publication de la demande: 23.12.1992
(73) Titulaire: PLASTIQUES RG, F-01430 Saint Martin Du Fresne (FR)
(72) Inventeur: Goujon, Daniel, F-01460 Montreal la Cluse (FR)
(74) Mandataire: Laurent, Michel

(56) Documents cités:
- DE-A- 2 122 611
- DE-A- 2 657 753
- FR-A- 2 009 611
- FR-A- 2 101 680
- FR-A- 2 454 970
- FR-A- 2 606 701
- FR-A- 2 651 460
- LU-A- 68 597
- US-A- 3 684 418

## Description

L'invention concerne un dispositif pour amener et déposer dans un moule une étiquette souple sur un objet moulé, en épousant le contour de cet objet.

On sait depuis longtemps déposer une étiquette dans un moule, en profitant du mouvement d'ouverture de ce moule (voir par exemple document FR-A-1 593 056, DE-A-2 657 753, US-A-4 368 018 et FR-A-2 576 832 et FR-A-2 596 028). Pour l'essentiel, ces dispositifs comprennent :
. un moule en deux parties, généralement l'une fixe et l'autre mobile,
. un magasin d'étiquettes, disposé au dessus du moule,
. un organe d'amenée du porte-étiquette, apte à saisir une étiquette dans le magasin et à amener celle-ci dans le moule, actionné en synchronisme et par l'ouverture de ce moule.

Dans le document FR-A-2 171 299, on a suggéré au moyen d'un système à pentographe, d'appliquer une étiquette souple sur un mandrin, à travers lequel éventuellement, on peut réaliser une dépression. On introduit ensuite ce mandrin dans le moule. Ce dispositif purement mécanique, n'est guère compatible avec les rendements actuellement recherchés. En outre, il fait appel à des pièces multiples, fragiles, qui peuvent facilement se déformer.

Dans le document FR-A-2 606 701 (correspondant connu US-A-4 784 593), l'étiquette est déposée sur un organe rotatif de transfert contre lequel elle est aspirée, puis cet organe rotatif est transporté dans le moule au moyen d'un système à crémaillères croisées (X-X', Y-Y') engrenées l'une avec l'autre. Ce système présente les inconvénients de faire appel tout d'abord à un moteur pour faire tourner et pivoter l'organe de transfert de manière appropriée, et ensuite à des crémaillères dont on sait qu'elles peuvent facilement se détériorer en cours de fonctionnement, par suite notamment de la pénétration de corps étrangers.

L'invention pallie ces inconvénients. Elle vise un dispositif essentiellement mécanique pour la dépose d'une étiquette souple sur un objet moulé en épousant les contours latéraux de cet objet, et ce dans le moule même de production de cet objet, dispositif qui soit simple à construire, fiable et facile à mettre en oeuvre de manière précise.

L'invention vise également un dispositif de dépose d'une étiquette souple dans un moule, susceptible de convenir aux cadences actuelles, et qui permette de déposer cette étiquette sur partie essentielle, sinon totale, du pourtour de l'objet fabriqué dans le moule.

Ce dispositif pour amener et déposer une étiquette souple sur un objet moulé dont elle épouse partie du contour latéral, dans un moule de machine à injection de matière plastique, comprenant :
- un moule en deux parties, respectivement fixe et mobile, portant une empreinte ;
- un magasin d'étiquettes, disposé au dessus du moule ;
- un moyen d'amenée d'une étiquette souple dans l'empreinte, comprenant :
   . un organe de saisie de l'étiquette dans le magasin,
   . un organe de dépose de cette étiquette sur un mandrin dont la forme extérieure correspond à celle de l'objet à revêtir,
   . au moins une paire de glissières verticales disposées au voisinage d'un des deux flancs latéraux du mandrin fixe, aptes à recevoir une étiquette amenée par l'organe de saisie et à la positionner en face du mandrin fixe,
   . un organe de transport du mandrin ainsi revêtu dans l'empreinte, actionné en synchronisme et par l'ouverture du moule,
caractérisé en ce que l'organe de dépose de l'étiquette souple sur le mandrin fixe comprend au moins une mâchoire dont la forme extérieure correspond à la forme externe du flanc latéral du mandrin disposé en regard de celle-ci, ladite mâchoire étant actionnée d'un mouvement de translation horizontal, et ayant une largeur inférieure à l'écartement entre deux glissières de la même paire, destinée à pousser l'étiquette souple verticale à travers la paire de glissières, puis à la plaquer sur les flancs du mandrin fixe.

En d'autres termes, l'organe de dépose de l'étiquette souple comprend deux glissières parallèles verticales, sur laquelle l'organe de saisie va amener l'étiquette souple, qui tombe entre les glissières par gravité, disposées au voisinage du mandrin, et une mâchoire actionnée d'un mouvement horizontal, destinée à forcer cette étiquette verticale à travers les glissières, pour venir la plaquer contre le mandrin fixe.

Avantageusement, en pratique :
- l'organe de saisie de l'étiquette est constitué par un porte-étiquette susceptible d'être animé d'un mouvement vertical alternatif, qui comporte des buses d'aspiration sur la face en regard du magasin, de manière à ce que, selon le cas, soit les buses viennent saisir une étiquette dans le magasin qui est fixe, soit le magasin est animé d'un mouvement horizontal ou sensiblement horizontal de va-et-vient, pour amener une étiquette au contact de ces buses, qui saisissent alors cette étiquette, pour la translater verticalement vers le bas, juste en dessus de la paire de glissières ;
- le mandrin présente des orifices disposés sur les flancs latéraux destinés à recevoir l'étiquette, de sorte que sous l'effet d'une aspiration exercée à l'intérieur du mandrin, l'étiquette soit parfaitement plaquée sur les flancs latéraux du mandrin ;
- l'organe de transport du mandrin fixe ainsi revêtu d'une étiquette souple jusque dans l'empreinte, est assuré par un système à vérins pneumatiques, hydrauliques, électriques ou autres ;
- l'organe de dépose comprend essentiellement :
   . deux paires de glissières verticales, disposées de part et d'autre et au voisinage du mandrin, et dont l'extrémité inférieure forme butée pour l'étiquette qui tombe par gravité,
   . deux mâchoires horizontales animées d'un mouvement alternatif de rapprochement, puis d'écartement par rapport au mandrin, et à travers les deux paires de glissières,
   de sorte que deux étiquettes peuvent alors recouvrir partie essentielle, sinon la totalité, du contour de l'objet moulé ;
- l'empreinte, dont la forme correspond à la forme externe du mandrin, présente en périphérie des orifices reliés à une source de dépression, de sorte que lorsqu'on a introduit le mandrin revêtu dans le moule, on transfère, de manière connue, par un organe de transport, l'étiquette sur les parois de l'empreinte, juste avant l'injection de la matière plastique.

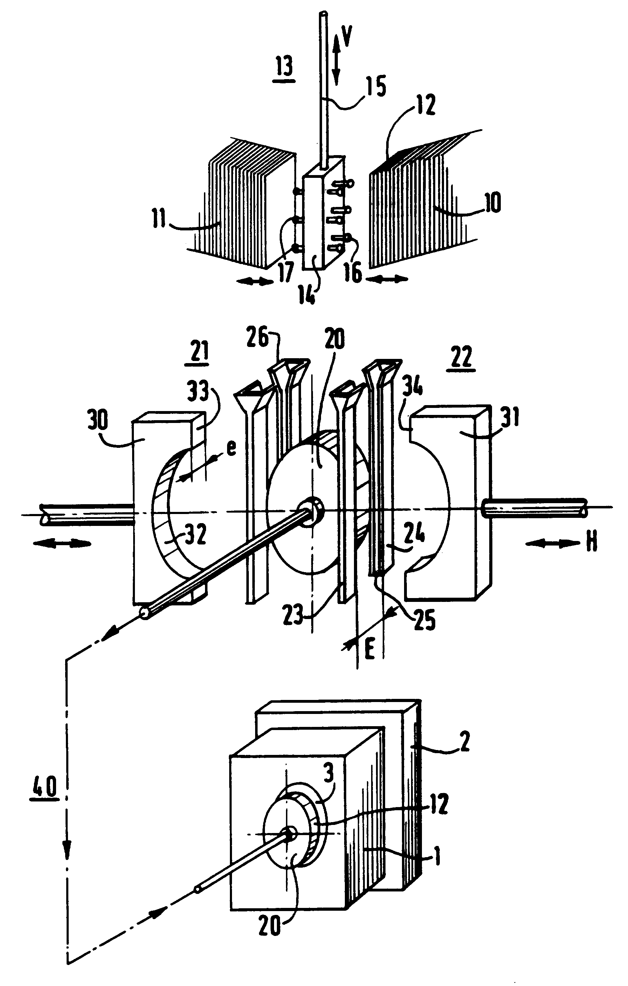

La manière dont l'invention peut être réalisée et les avantages qui en découlent ressortiront mieux de l'exemple de réalisation qui suit, à l'appui de la figure unique annexée.

La machine à injection de matière plastique comprend de manière connue un moule (1) en deux parties, respectivement fixe (1) montée sur un plateau (2) et une partie mobile non représentée pour ne pas surcharger inutilement la figure. Ces deux parties portent une empreinte symbolisée par la référence (3).

De manière connue, l'ensemble comporte un magasin d'étiquettes montré ici à double, respectivement (10) et (11), sur lequel les étiquettes élémentaires (12) sont empilées. Toujours de manière connue, l'ensemble comporte un organe de saisie d'une étiquette désigné par la référence générale (13) dans le magasin (10) et/ou (11), constitué par un porte-étiquette (14) relié par une tige (15) à un organe susceptible de l'animer d'un mouvement vertical V alternatif. De manière connue, le porte-étiquette (14) présente sur ses faces de manière connue, des buses d'aspiration respectivement (16) et (17), destinées à venir saisir une étiquette (12). Dans une première forme de réalisation connue, les buses, par exemple (16), sont susceptibles d'avancer pour venir saisir la première étiquette (12) dans le magasin (10) fixe. Dans une seconde forme d'exécution, les buses d'aspiration (17) sont fixes et le magasin, par exemple (11), est animé d'un mouvement de déplacement horizontal alternatif, commandé en synchronisme et éventuellement par l'ouverture du moule (1).

Selon une première caractéristique de l'invention, le dispositif de dépose comprend un mandrin fixe (20) dont la périphérie est percée de trous et est reliée à une source de dépression de manière à bien plaquer, le moment venu, l'étiquette contre les flancs latéraux de ce mandrin. Selon une première caractéristique de l'invention, au voisinage immédiat de ce mandrin, on dispose deux paires de glissières verticales, désignées par les références générales (21,22), constituées chacune par deux glissières parallèles verticales (23,24), dont l'écartement interne correspond sensiblement à celui de l'étiquette souple à déposer et dont les extrémités (25) forment butée pour positionner cette étiquette juste en face d'un flanc du mandrin (20). Dans la forme de réalisation préférée et représentée, on utilise deux paires (21) et (22) de glissières disposées juste au voisinage immédiat des flancs du mandrin, de manière à ce que les étiquettes déposées puissent entièrement recouvrir tout le pourtour de l'objet à mouler. Le haut (26) des glissières (23,24) forme goulotte pour assurer la mise en place de l'étiquette.

Par un mouvement de va-et-vient vertical, l'organe de saisie (13) de l'étiquette (12) amène celle-ci en dessus de la goulotte (26) d'une paire de glissières (21,22). A ce moment, on cesse la dépression sur les buses (16,17). Il s'ensuit que l'étiquette (12) concernée tombe alors par gravité dans la glissière (21,22) et vient, grâce aux butées (25), se positionner juste à côté d'un flanc du mandrin (20).

Selon une seconde caractéristique de l'invention, l'ensemble comporte également une paire de deux mâchoires, respectivement (30) et (31), dont la forme intérieure (32) correspond à la forme externe du flanc latéral du mandrin (20) disposé en regard de celle-ci. Ces deux mâchoires (30,31) sont actionnées d'un mouvement de translation horizontal (H), commandé en synchronisme par tout moyen approprié par l'ouverture du moule.

Selon une autre caractéristique de l'invention, la largeur (e) de ces mâchoires (30,31) est légèrement inférieure à l'écartement (E) entre deux crémaillères (23,24) de la même paire (22). De la sorte, lorsque les mâchoires se rapprochent du mandrin, leurs bords d'attaque (33,34) poussent les bords de l'étiquette souple (12) à travers cette paire (22) de crémaillères, puis viennent plaquer l'étiquette contre le flanc latéral concerné du mandrin (20). A ce moment, on exerce une dépression à travers le mandrin (20), de sorte que l'étiquette (12) est parfaitement plaquée contre les deux flancs latéraux du mandrin (20).

A ce moment, commandé par un système à vérin (40) lui-même actionné par l'ouverture du moule, le mandrin (20) revêtu de l'étiquette (12) est introduit dans l'empreinte (3). Comme déjà dit, les parois de l'empreinte (3) présentent des petits orifices reliés à une source de dépression. Lorsque le mandrin (20) revêtu de l'étiquette (12) est dans l'empreinte, on coupe la dépression dans le mandrin (20), et simultanément on ouvre la dépression sur les parois de l'empreinte (3). De la sorte, l'étiquette (12), en forme de couronne, se trouve intégralement transférée et positionnée sur les parois de l'empreinte (3). Lorsque l'on injecte la matière pour former l'objet, automatiquement les flancs de cet objet se trouvent revêtus sur tout le pourtour de l'étiquette (12) appropriée.

Il va de soi que, de manière connue, juste avant la phase d'injection, on retire du moule le mandrin (20) dégarni.

Le dispositif selon l'invention se distingue de ceux commercialisés à ce jour, par sa simplicité, son efficacité, sa sûreté et sa fiabilité. En outre, comme on ne fait pas appel à des pièces mécaniques complexes, il convient parfaitement pour des fabrications en grandes séries et à cadences élevées.

## Revendications

1. Dispositif pour amener et déposer une étiquette souple (12) sur un objet moulé, dont elle épouse partie du contour latéral, dans un moule de machine à injection de matière plastique comprenant :
- un moule en deux parties, respectivement fixe (1) et mobile, portant une empreinte (3) ;
- un magasin d'étiquettes (10,11), disposé au dessus du moule ;
- un moyen d'amenée d'une étiquette souple dans l'empreinte (3), comprenant :
. un organe de saisie (13) de l'étiquette (12) dans le magasin (10,11),
. un organe de dépose de cette étiquette sur un mandrin (20) dont la forme extérieure correspond à celle de l'objet à revêtir,
. au moins une paire (21,22) de glissières verticales (23,24) disposées au voisinage d'un des deux flancs latéraux du mandrin (20) fixe, aptes à recevoir une étiquette (12) amenée par l'organe de saisie (13) et à la positionner en face du mandrin fixe (20),
. un organe de transport (40) du mandrin (20) ainsi revêtu dans l'empreinte (3), actionné en synchronisme et par l'ouverture du moule,
caractérisé en ce que l'organe de dépose de l'étiquette souple (12) sur le mandrin fixe (20) comprend au moins une mâchoire (30,31) dont la forme extérieure (32) correspond à la forme externe du flanc latéral du mandrin (20) disposé en regard de celle-ci, ladite mâchoire (30,31) étant actionnée d'un mouvement de translation H horizontal, et ayant une largeur (e) inférieure à l'écartement (E) entre deux glissières (23,25) de la même paire (21,22), destinée à pousser l'étiquette souple (12) verticale à travers la paire de glissières (21,22), puis à la plaquer sur les flancs du mandrin fixe (20).

2. Dispositif selon la revendication 1, caractérisé en ce que l'organe de saisie (13) de l'étiquette (12) est constitué par un porte-étiquette (14) susceptible d'être animé d'un mouvement vertical (V) alternatif, qui comporte des buses d'aspiration (16,17) sur la face en regard du magasin (10,11).

3. Dispositif selon la revendication 1, caractérisé en ce que le mandrin fixe (20) présente des orifices d'aspiration sur les flancs latéraux destinés à recevoir l'étiquette (12).

4. Dispositif selon la revendication 1, caractérisé en ce que l'organe de transport (40) du mandrin (20) revêtu de l'étiquette souple (12) dans l'empreinte (3) est assuré par un système à vérins.

5. Dispositif selon la revendication 1, caractérisé en ce que l'organe de dépose comprend :
. deux paires (21,22) de glissières verticales (23,24), disposées de part et d'autre et au voisinage du mandrin fixe (20), et dont l'extrémité inférieure (25) forme butée pour l'étiquette (12),
. deux mâchoires horizontales (30,31) disposées face à face et de part et d'autre du mandrin fixe (20), animées d'un mouvement alternatif horizontal (H) de rapprochement puis d'écartement par rapport au mandrin fixe (20).

## Claims

1. Apparatus for feeding and depositing a flexible label (12) onto a moulded article, part of the lateral contour of which the label matches, in a mould of a plastic injection-moulding machine, comprising:
- a two-part mould, the two parts being respectively the fixed part (1) and the movable part, carrying a mould cavity (3);
- a label magazine (10, 11) arranged above the mould;
- a means for feeding a flexible label into the mould cavity (3), comprising:
• a member (13) for grabbing the label (12) from the magazine (10, 11);
• a member for depositing this label onto a mandrel (20), the external shape of which corresponds to that of the object to be coated;
• at least one pair (21, 22) of vertical slideways (23, 24) arranged in the vicinity of one of the two sidewalls of the fixed mandrel (20), these being capable of receiving a label (12) fed by the grabbing member (13) and of positioning it opposite the fixed mandrel (20);
• a member (40) for transferring the mandrel (20) thus coated into the mould cavity (3), this member being driven in synchronism and by the opening of the mould;
characterized in that the member for depositing the flexible label (12) onto the fixed mandrel (20) comprises at least one jaw (30, 31), the external shape (32) of which corresponds to the external shape of the sidewall of the mandrel (20) arranged facing this jaw, the said jaw (30, 31) being driven with a horizontal translational movement H and having a width (e) less than the separation (E) between two slideways (23, 25) of the same pair (21, 22), which jaw is intended to push the vertical flexible label (12) through the pair of slideways (21, 22) and then to press it against the sidewalls of the fixed mandrel (20).

2. Apparatus according to Claim 1, characterized in that the member (13) for grabbing the label (12) consists of a label holder (14), capable of being driven with a reciprocating vertical movement (V), which includes suction nozzles (16, 17) on the face opposite the magazine (10, 11).

3. Apparatus according to Claim 1, characterized in that the fixed mandrel (20) has suction holes on the sidewalls intended to receive the label (12).

4. Apparatus according to Claim 1, characterized in that the member (40) for transferring the mandrel (20) coated with the flexible label (12) into the mould cavity (3) is ensured by a system based on cylinder actuators.

5. Apparatus according to Claim 1, characterized in that the depositing member comprises:
• two pairs (21, 22) of vertical slideways (23, 24) which are arranged on each side of and in the vicinity of the fixed mandrel (20) and the lower end (25) of which forms a stop for the label (12);
• two horizontal jaws (30, 31) which are arranged facing each other on each side of the fixed mandrel (20) and are driven with a horizontal reciprocating movement (H) up to and then away from the fixed mandrel (20).

## Patentansprüche

1. Vorrichtung zum Zuführen und Anbringen eines flexiblen Etiketts (12) an einen gegossenen Gegenstand, an dessen seitliche Kontur es sich anschmiegt, in einer Kunststoff-Spritzgießmaschine, mit:
- einer Form aus zwei Teilen, nämlich einem feststehenden (1) und einem beweglichen Teil, welche Form eine Höhlung (3) aufweist;
- einem oberhalb der Form angeordneten Etikettenmagazin (10,11);
- einem Zuführmittel zum Zuführen eines flexiblen Etiketts in die Formhöhlung (3), mit:
• einem Greiforgan (13) zum Ergreifen des Etiketts (12) aus dem Magazin (10,11),
• einem Anbring-Organ zum Anbringen dieses Etiketts auf einen Tragkörper (20), dessen äußere Form der des mit dem Etikett zu versehenen Gegenstands entspricht,
• mindestens einem Paar (21,22) vertikaler Gleitführungen (23,24), die in der Nähe einer der beiden seitlichen Flanken des feststehenden Tragkörpers (20) angeordnet und dazu geeignet sind, ein durch das Greiforgan (13) zugeführtes Etikett (12) aufzunehmen und in eine Position gegenüber dem feststehenden Tragkörper (20) zu bringen,
• einem Transportorgan (40) für den Transport des auf diese Weise mit dem Etikett versehenen Tragkörpers (20) in die Formhöhlung (3), welches Transportorgan (40) durch das Öffnen der Form und hierzu synchron betätigt wird,
**dadurch gekennzeichnet**, daß das Anbring-Organ zum Anbringen des flexiblen Etiketts (12) auf dem feststehenden Tragkörper (20) mindestens eine Backe (30,31) umfaßt, deren äußere Form (32) der äußeren Form mit der gegenüberliegenden seitlichen Flanke des Tragkörpers (20) übereinstimmt, wobei die genannte Backe (30,31) in einer horizontalen Translationsbewegung (H) betätigt wird und eine Dicke (e) hat, die geringer ist als der Abstand (E) zwischen zwei Gleitführungen (23,25) des gleichen Paares (21,22), und die dazu vorgesehen ist, das vertikal sich erstreckende flexible Etikett (12) durch das Gleitführungspaar (21,22) hindurchzudrücken und gegen die Flanken des feststehenden Tragkörpers (20) anzuschmiegen.

2. Vorrichtung nach Anspruch 1, **dadurch gekennzeichnet**, daß das Greiforgan (13) zum Ergreifen des Etiketts (12) von einem Etikettenträger (14) gebildet wird, der in einer alternierenden Vertikalbewegung (V) bewegbar ist und der Ausaugdüsen (16,17) auf der dem Magazin (10,11) gegenüberliegenden Fläche aufweist.

3. Vorrichtung nach Anspruch 1, **dadurch gekennzeichnet**, daß der feststehende Tragkörper (20) Ansaugöffnungen auf den zur Aufnahme des Etiketts (12) vorgesehenen seitlichen Flanken aufweist.

4. Vorrichtung nach Anspruch 1, **dadurch gekennzeichnet**, daß das Transportorgan (40) für den Transport des mit dem flexiblen Etikett (12) versehenen Tragkörpers (20) in die Formhöhlung (3) mit einem Stellantrieb-System versehen ist.

5. Vorrichtung nach Anspruch 1, gekennzeichnet durch ein Anbring-Organ mit:
• zwei Paaren (21,22) vertikaler Gleitführungen (23,24), die zu beiden Seiten in der Nähe des feststehenden Tragkörpers (20) angeordnet sind und deren unteres Ende (25) einen Anschlag für das Etikett (12) bildet,
• zwei horizontalen Backen (30,31), die einander gegenüberliegend zu beiden Seiten des feststehenden Tragkörpers (20) angeordnet sind und zu einer alternierenden Horizontalbewegung (H) zunächst zu einer Annäherung an den und anschließend einer Entfernung von dem feststehenden Tragkörper (20) angetrieben werden.
